# EUROPÄISCHE PATENTSCHRIFT

(11) **EP 1 227 280 B1**
(45) Veröffentlichungstag und Bekanntmachung des Hinweises auf die Patenterteilung: **04.01.2006**
(21) Anmeldenummer: 02000756.3
(22) Anmeldetag: 12.01.2002
(51) Int. Cl.: F24D 3/10, F24D 5/10, F24D 3/14

(54) **Bodenelement zum Erstellen von Hohlraumböden für Heizrohre einer Raumheizung sowie für Heiz- und Kühlrohre einer kombinierten Raumheizung und Raumkühlung für Gebäude**
Flooring element for making a hollow floor for heating pipes of a space heating also for heating or cooling pipes of a combined space heating or cooling
Elément de plancher pour construire un plancher surélevé pour tubes d'un chauffage de locaux comme pour les tubes d'un chauffage et réfrigeration de locaux combinés

(30) Priorität: 24.01.2001 DE 10103001
(43) Veröffentlichungstag der Anmeldung: 31.07.2002
(73) Patentinhaber: Schütz GmbH & Co. KGaA, 56242 Selters (DE)
(72) Erfinder: Schütz, Udo, 56242 Selters /Ww. (DE)
(74) Vertreter: Pürckhauer, Rolf

(56) Entgegenhaltungen:
- DE-A- 19 720 971
- DE-A- 19 750 277
- WILSCHUT J: "MET IETS DIKKERE AFWERKVLOER EEN BETER BINNENKLIMAAT AIR-CON SYSTEEM COMBINEERT VOORDELEN VAN VLOER- EN LUCHTVERWARMING" BOUWWERELD, MISSET. DOETINCHEM, NL, Bd. 90, Nr. 12, 10. Juni 1994 (1994-06-10), Seiten 39-41, XP000452283 ISSN: 0026-5942

## Beschreibung

Die Erfindung betrifft ein Bodenelement zum Erstellen von Hohlraumböden für Heizrohre einer Raumheizung sowie für Heiz- und Kühlrohre einer kombinierten Raumheizung und Raumkühlung für Gebäude, das als Kunststoffplatte mit tiefgezogenen Halteelementen auf der Plattenoberseite zum Verlegen der Rohrschlangen von als Heiz- oder Kühlkreise betreibbaren Rohrkreisläufen einer Raumheizung oder einer kombinierten Raumheizung und Raumkühlung und tiefgezogenen Stütz- und Distanzelementen auf der Plattenunterseite zum Abstützen der Platte auf einem Gebäudeboden und zur Bildung eines Hohlraumes ausgebildet ist, durch den ein Frischluft- und/oder Umluftstrom zur Erwärmung oder Kühlung durch die Fußbodenheizung bzw. Fußbodenkühlung in einen Gebäuderaum geleitet wird.

Ein Solches Bodenelement ist bekannt aus DE 19 720 971.

Flächenheizungen, insbesondere Fußbodenheizungen sind weit verbreitet. Aus der Zeitschrift "Elektrizitätswirtschaft", Jahrgang 68 (1969), Heft 1, Seite 9, ist ein Fußbodenheizungssystem in Trockenbauweise bekannt, bei dem elektrische Heizkabel in Kanälen verlegt sind.

Ferner sind aus der DE 30 14 390 A1 entsprechende Fußbodenheizungen mit wasserführenden Heizrohren bekannt.

Die bekannten Fußbodenheizungen haben den Nachteil, daß sie eine gewisse Trägheit in ihrer Regelbarkeit aufweisen. Deshalb werden zur Einhaltung der gewünschten Raumtemperaturen häufig zusätzlich thermostatisch regelbare Direktheizungen installiert. Die im Fußboden installierte Heizleistung dient dann also lediglich der Deckung des Grundwärmebedarfs. Die Installation einer zusätzlichen Direktheizung ist mit hohem Aufwand verbunden, insbesondere, da diese im Falle einer Flüssigkeitsheizung in der Regel mit höher temperiertem Wasser als die Fußbodenheizung betrieben werden muß. Nachteilig stellt sich ferner bei Fußbodenheizungen im Bereich von Fenstern und Türen ein sogenannter Kaltluftvorhang ein. Weiterhin ergibt sich nachteilig eine ungleichmäßige Wärmeverteilung auf der Fußbodenoberfläche. Die Temperatur erreicht jeweils an den Stellen, an denen ein Heizelement im Fußboden angeordnet ist, ein Maximum, und sie fällt im Bereich zwischen zwei Heizelementen auf ein Minimum ab.

Diese Nachteile werden durch kombinierte Raumheizungen und Raumkühlungen der gattungsgemäßen Art vermieden (Prospekt der Firma Schütz EHT GmbH & Co. KG, Ausgabe 1999). Bei den bekannten kombinierten Raumheizungen und Raumkühlungen wird auf einen Rohbetonboden eine Trittschall-Wärmedämmung aufgebracht, auf der Bodenelemente verlegt werden, die aus vakuumverformten Nocken-Kegel-Distanzplatten bestehen, auf deren Oberseite Rohrschlangen von Heiz- bzw. Kühlkreisen fixiert werden, die entsprechend der gewünschten Raumtemperatur und in Abhängigkeit von der jeweiligen Außentemperatur über Rohrverteiler durch Regler an eine Warm- oder Kühlwasseranlage angeschlossen werden. Auf die Oberseite der Bodenelemente wird eine Estrichschicht aufgebracht, in der die Rohrschlangen eingebettet werden, und die Estrichschicht erhält einen Fliesen- oder Teppichbelag. Auf der Unterseite der Bodenelemente entsteht durch die Kegel ein Hohlraumboden, durch den Luft geleitet wird, die durch die von Warm- bzw. Kaltwasser durchströmten Rohrschlangen erwärmt bzw. gekühlt wird. Die warme bzw. kalte Luft tritt je nach Raumgröße über einen oder mehrere nach oben offene, durch Gitter abgedeckte Luftauslaßschächte im Fußboden in den Gebäuderaum ein.

Ein entscheidender Nachteil der bekannten kombinierten Raumheizung und Raumkühlung besteht darin, daß beim Verlegen der Bodenelemente auf einem Rohbetonboden oder einer auf einem Rohbetonboden aufgebrachten Trittschalldämmung Verunreinigungen in dem Hohlraumboden zurückbleiben, die bei Betrieb der kombinierten Raumheizung und Raumkühlung über längere Zeit mit dem durch den Hohlraumboden geleiteten Warm- oder Kaltluftstrom als Staubpartikel in die Gebäuderäume gelangen, eine Verschmutzung der Räume verursachen und im ungünstigsten Fall sogar gesundheitliche Schäden bei Personen herbeiführen können, die sich länger in den Gebäuderäumen aufhalten.

Der Erfindung liegt die Aufgabe zugrunde, die Konstruktion des gattungsgemäßen Bodenelements zum Erstellen von Hohlraumböden für Heizrohre einer Raumheizung sowie für Heiz- und Kühlrohre einer kombinierten Raumheizung und Raumkühlung für Gebäude dahingehend zu verbessern, daß bei der Verlegung des Bodenelements das Eindringen von Bauschmutz in den Hohlraumboden vermieden wird.

Diese Aufgabe ist erfindungsgemäß gelöst durch ein Bodenelement mit den Merkmalen des Patentanspruchs 1.

Die Unteransprüche beinhalten vorteilhafte und zweckmäßige Weiterbildungen der Erfindung.

Die Konstruktion des erfindungsgemäßen Bodenelements, die eine Oberplatte mit Halteelementen auf der Plattenoberseite zum Verlegen von Rohrschlangen und Stütz- und Distanzelementen auf der Plattenunterseite sowie eine mit den Stütz- und Distanzelementen der Oberplatte verschweißte Unterplatte zur Ausbildung eines Durchströmraumes bzw. Durchströmkanals für einen in einen Gebäuderaum einzuleitenden Luftstrom verwendet, der beim Durchströmen durch den Hohlraum eines aus den Bodenelementen erstellten Hohlraumbodens durch die Heiz- bzw. Kühlrohre des Hohlraumbodens erwärmt bzw. abgekühlt wird, gewährleistet das Verlegen von Hohlraumböden, deren Luftdurchtrittsraum unabhängig von dem jeweiligen Zustand des Unterbodens gegen das Eindringen von Bauschmutz geschützt ist.

Die Erfindung ist nachstehend anhand von Zeichnungsfiguren erläutert, die folgendes darstellen:
- Fig.1: Das Schema einer kombinierten Raumheizung und Raumkühlung,
- Fig. 2: eine perspektivische Oberansicht eines Bodenelements zum Erstellen von Hohlraumböden für Heiz- und Kühlrohre einer kombinierten Raumheizung und Raumkühlung und die
- Figuren 3 - 5: schematische Längsschnitte des Bodenelementes nach den Schnittlinien III - III, IV - IV und V - V der Figur 2.

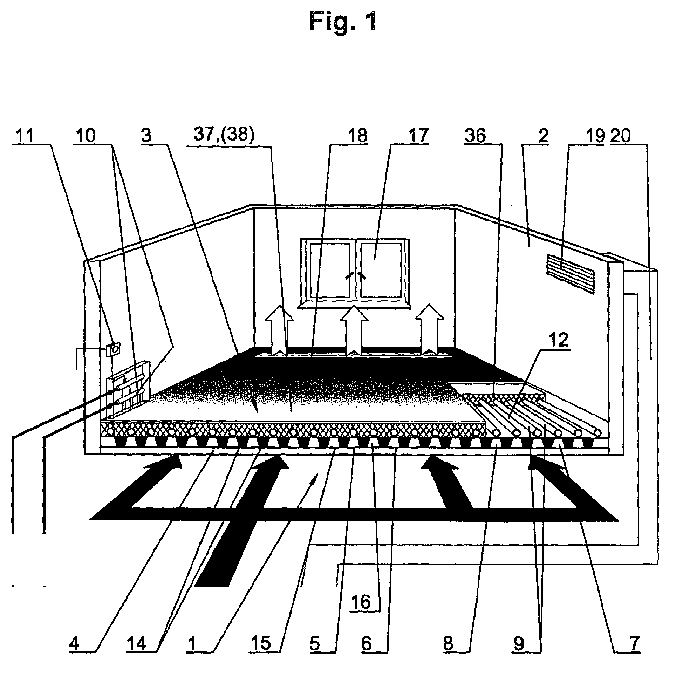

Die Schemadarstellung nach Figur 1 zeigt einen mit einer kombinierten Raumheizung und Raumkühlung 1 ausgestatteten Gebäuderaum 2. Auf den Rohbetonboden 4 des Fußbodens 3 sind eine Trittschall- und Wärmedämmung 5 sowie Druckplatten 6 aufgebracht, auf denen Bodenelemente 8 eines Hohlraumbodens 7 zur Aufnahme der Rohrschlangen 9 von bedarfsweise als Heiz- oder Kühlkreise betreibbaren Rohrkreisläufen einer kombinierten Raumheizung und Raumkühlung verlegt sind.

Die Heiz- bzw. Kühlkreise werden entsprechend der gewünschten Raumtemperatur und in Abhängigkeit von der jeweiligen Außentemperatur über Rohrverteiler 10 durch Regler 11 an eine Warm- und/oder Kühlwasseranlage angeschlossen.

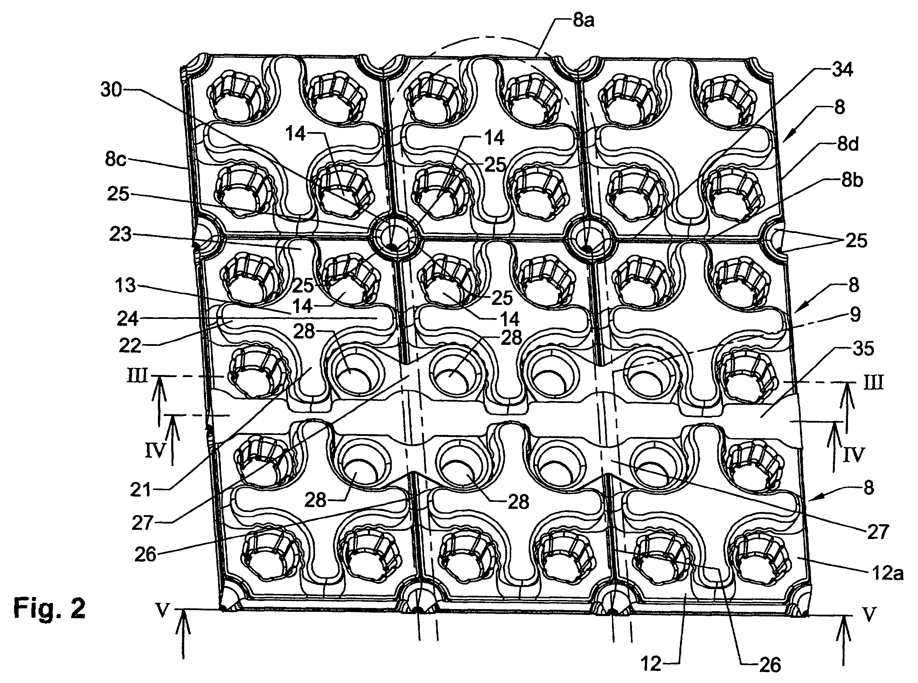

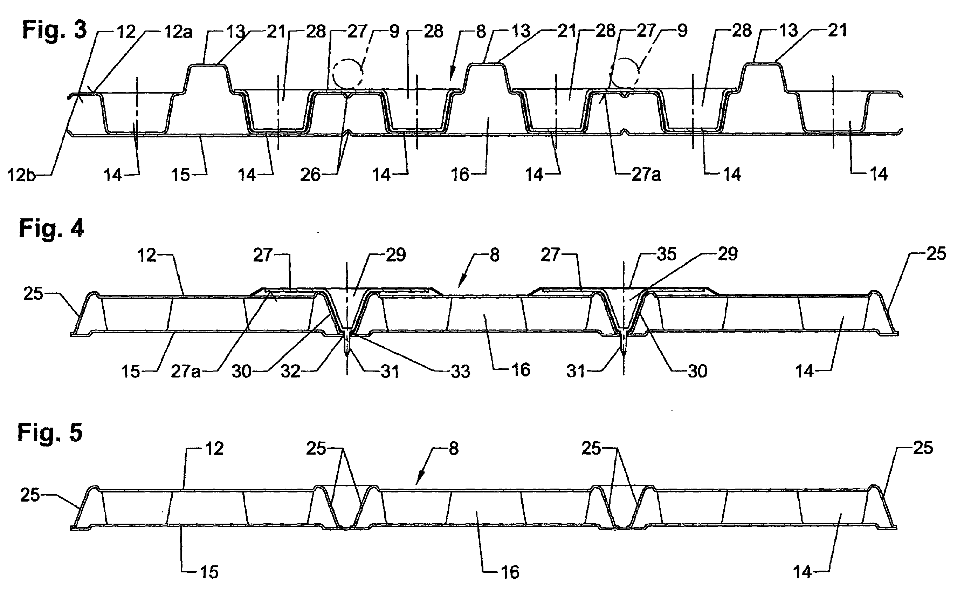

Die in den Figuren 2 bis 5 dargestellten Bodenelemente 8 weisen eine Oberplatte 12 aus Kunststoff mit tiefgezogenen Fixierkreuzen 13 auf der Plattenoberseite 12a für die Rohrschlangen 9 und tiefgezogenen Stütz- und Distanznocken 14 auf der Plattenunterseite 12b auf. Die Stütz- und Distanznocken 14 der Oberplatte 12 der Bodenelemente 8 sind mit einer auf den Rohbetonboden 4 bzw. die Trittschall- und Wärmedämmung 5 des Fußbodens 3 auflegbaren Unterplatte 15 aus Kunststoff zu einem an seinen vier Rändern 8a - 8d offenen, rechteckigen Hohlraumelement mit einem Durchströhmraum 16 für Frischluft und/oder Umluft verschweißt, die durch die von Warm- bzw. Kaltwasser durchströmten Rohrschlangen 9 erwärmt bzw. gekühlt wird und die durch einen oder mehrere bevorzugt im Bereich von Fenstern 17 in dem Fußboden 3 eingelassene Luftauslaßkästen 18 in den Gebäuderaum 2 eingeblasen wird. Die Abluft wird über einen oder mehrere Luftaustrittsöffnungen 19 im Deckenbereich und Abluftleitungen 20 aus dem Gebäuderaum 2 abgesaugt (Fig. 1).

Eine weitere Erwärmung bzw. Kühlung der Raumluft erfolgt durch die von den Heiz- bzw. Kühlrohrschlangen 9 des Hohlraumbodens 7 über die Oberfläche des Fußbodens 3 abgegebene Wärme bzw. Kälte.

Die aus der Oberseite 12a der Oberplatte 12 der Bodenelemente 8 tiefgezogenen Fixierkreuze 13 für die Rohrschlangen 9 werden durch rechtwinklig zueinander angeordnete Haltestege 21 - 24 mit abgerundeten äußeren Enden gebildet.

Die Oberplatte 12 weist an den vier Rändern 8a - 8d des als Hohlraumelement ausgebildeten Bodenelements 8 aus der Plattenunterseite 12b tiefgezogene, mit der Unterplatte 15 verbundene Noppensegmente 25 auf, die als Verbindungselemente für zwei oder vier angrenzende Bodenelemente 8 dienen.

Die Stütz- und Distanznoppen 14 und die Noppensegmente 25 der Oberplatte 12 der Bodenelemente 8 werden beim Vakuumtiefziehen mit der Unterplatte 15 verschweißt.

In die Oberplatte 12 und die Unterplatte 15 der Bodenelemente 8 sind in einem Raster deckungsgleiche Schneidrillen 26 zum Schneiden von unterschiedlichen Bodenelementformaten eingeformt.

Zur Verbindung der Bodenelemente 8 dienen Verbindungsplatten 27 mit vier an deren Unterseite 27a angeformten, im Raster der Stütz- und Distanznocken 14 der Bodenelemente 8 angeordneten, hohlen Verbindungszapfen 28 mit einer der Form der Nocken 14 der Bodenelemente 8 angepaßten Form sowie einem weiteren zentrisch zwischen den vier Verbindungszapfen 28 an der Plattenunterseite 27a angeformten, hohlen Fixierzapfen 29 mit einer Form, die der Form der Verbindungsnoppen 30 angepaßt ist, die durch die Noppensegmente 25 an den vier Rändern 8a - 8d von zwei oder vier angrenzenden Bodenelementen 8 gebildet werden. An dem Fixierzapfen 29 der Verbindungsplatte 27 ist ein Stift oder Nagel 31 zum Befestigen der Verbindungsplatte 27 mit zwei oder vier durch diese zusammengehaltenen Bodenelementen 8 auf einem Fußboden 3 angeordnet, oder es wird ein gesonderter Stift oder Nagel zur Befestigung der Verbindungsplatte 29 verwendet.

Die Verbindungsplatte 27 greift mit jeweils zwei Verbindungszapfen 28 in jeweils zwei Stütz- und Distanznocken 14 zweier angrenzender Bodenelemente 8 und mit dem Fixierzapfen 29 in einen von den beiden Bodenelementen 8 gebildeten Verbindungsnoppen 30 ein.

Bei einem Eckstoß von vier Bodenelementen 8 greift die Verbindungsplatte 27 mit jeweils einem Verbindungszapfen 28 in jeweils einen Stütz- und Distanznocken 14 der vier Bodenelemente 8 und mit dem Fixierzapfen 29 in einen von den vier Bodenelementen 8 gebildeten Verbindungsnoppen 30 ein.

Zum Fixieren der Bodenelemente 8 auf dem Fußboden 3 eines Gebäuderaumes wird der Befestigungsstift oder Nagel 31 des Fixierzapfens 29 der Verbindungsplatte 27 durch ein Loch 32 im Grund 33 eines Verbindungsnoppens 30 von zwei oder vier angrenzenden Bodenelementen 8 in den Fußboden 3 und/oder eine auf diesem verlegte Trittschalldämmung 5 eingeschlagen.

Die Stoßfuge 34 zwischen zwei angrenzenden Bodenelementen 8 wird mit einem Klebeband 35 abgedichtet.

Nach dem Verlegen der Bodenelemente 8 eines Hohlraumbodens 7 auf dem Fußboden 3 eines Gebäuderaumes 2 werden die Rohrschlangen 9 auf dem Hohlraumboden 7 befestigt, und anschließend wird eine Estrichschicht 36 aufgebracht, die mit einem Teppichbodenbelag 37 oder einem Fliesenbelag 38 versehen wird (Fig. 1).

## Patentansprüche

1. Bodenelement zum Erstellen von Hohlraumböden für Heizrohre einer Raumheizung sowie für Heiz- und Kühlrohre einer kombinierten Raumheizung und Raumkühlung für Gebäude, das als Kunststoffplatte mit tiefgezogenen Halteelementen auf der Plattenoberseite zum Verlegen der Rohrschlangen von als Heiz- oder Kühlkreise betreibbaren Rohrkreisläufen einer Raumheizung oder einer kombinierten Raumheizung und Raumkühlung und tiefgezogenen Stütz- und Distanzelementen auf der Plattenunterseite zum Abstützen der Platte auf einem Gebäudeboden und zur Bildung eines Hohlraumes ausgebildet ist, durch den ein Frischluft- und/oder Umluftstrom zur Erwärmung oder Kühlung durch die Fußbodenheizung bzw. Fußbodenkühlung in einen Gebäuderaum geleitet wird, **dadurch gekennzeichnet, daß** das Bodenelement (8) eine Oberplatte (12) aus Kunststoff mit tiefgezogenen Halteelementen (Fixierkreuze 13) auf der Plattenoberseite (12a) zum Fixieren von Rohrschlangen (9) und tiefgezogenen Stütz- und Distanznocken (14) auf der Plattenunterseite (12b) aufweist und daß die Stütz- und Distanznocken (14) der Oberplatte (12) mit einer auf einen Gebäudeboden (3) auflegbaren Unterplatte (15) aus Kunststoff zu einem an seinen vier Rändern (8a - 8d) oder an zwei gegenüberliegenden Rändern offenen, rechteckigen oder quadratischen Hohlraumelement mit einem Durchströmraum (16) für Frischluft und/oder Umluft verbunden sind.

2. Bodenelement nach Anspruch 1, **dadurch gekennzeichnet, daß** die Oberplatte (12) an den vier Rändern (8a - 8d) des als Hohlraumelement ausgebildeten Bodenelements (8) aus der Plattenunterseite (12b) tiefgezogene, mit der Unterplatte (15) verbundene Noppensegmente (25) aufweist, die als Verbindungselemente für zwei oder vier angrenzende Bodenelemente (8) dienen.

3. Bodenelement nach Anspruch 1 und 2, **dadurch gekennzeichnet, daß** die Stütz- und Distanznocken (14) und die Noppensegmente (25) der Oberplatte (12) mit der Unterplatte (15) verschweißt oder verklebt sind.

4. Bodenelement nach einem der Ansprüche 1 bis 3, **gekennzeichnet durch** aus der Oberseite (12a) der Oberplatte (12) tiefgezogene Fixierkreuze (13) für die Rohrschlangen (9), deren (13) rechtwinklig zueinander angeordnete Haltestege (21 - 24) abgerundete äußere Enden aufweisen.

5. Bodenelement nach einem der Ansprüche 1 bis 4, **gekennzeichnet durch** in die Oberplatte (12) und die Unterplatte (15) in einem Raster deckungsgleich eingeformte Schneidrillen (26) zum Schneiden unterschiedlicher Bodenelementformate.

6. Verbindungsplatte für Bodenelemente nach Anspruch 1 bis 5, **gekennzeichnet durch** an der Unterseite (27a) der Verbindungsplatte (27) angeformte, im Raster der Stütz- und Distanznocken (14) der Bodenelemente (8) angeordnete, hohle Verbindungszapfen (28) mit einer der Nockenform der Nocken (14) der Bodenelemente (8) angepaßten Form sowie einen weiteren zentrisch zwischen den vier Verbindungszapfen (28) an der Plattenunterseite (27a) angeformten, hohlen Fixierzapfen (29) mit einer Form, die der Form der Verbindungsnoppen (30) angepaßt ist, die **durch** die Noppensegmente (25) an den vier Rändern (8a - 8d) von zwei oder vier angrenzenden Bodenelementen (8) gebildet werden, sowie einen an dem Fixierzapfen (29) angeformten oder einen gesonderten Stift oder Nagel (31) zum Befestigen der Verbindungsplatte (27) mit zwei oder vier **durch** diese zusammengehaltenen Bodenelementen (8) auf einem Gebäudeboden (3), wobei die Verbindungsplatte (27) mit jeweils zwei Verbindungszapfen (28) in jeweils zwei Stütz- und Distanznocken (14) zweier angrenzender Bodenelemente (8) und mit dem Fixierzapfen (29) in einen von den beiden Bodenelementen (8) gebildeten Verbindungsnoppen (30) eingreift oder die Verbindungsplatte (27) mit jeweils einem Verbindungszapfen (28) in jeweils einen Stütz- und Distanznocken (14) von vier in einem Eckstoß angrenzenden Bodenelementen (8) und mit dem Fixierzapfen (29) in einen von den vier Bodenelementen (8) gebildeten Verbindungsnoppen (30) eingreift und der Befestigungsstift oder Nagel (31) **durch** ein Loch (32) im Grund (33) eines Verbindungsnoppens (30) von zwei oder vier angrenzenden Bodenelementen (8) in den Gebäudeboden (3) und/oder eine auf diesem verlegte Trittschalldämmung (5) eingeschlagen wird.

7. Bodenelement mit Verbindungsplatte nach Anspruch 1 bis 6, **gekennzeichnet durch** das Abdichten der Stoßfuge (34) zwischen zwei angrenzenden Bodenelementen (8) mit einem Klebeband (35).

## Claims

1. Bottom element for making cavity bottoms for heating tubes of room heating and/or heating and cooling tubes of a combined room heating system or room cooling system of buildings, the element being constructed as a plastics plate with deep-drawn supporting elements on the plate upperside for installing the spiral tubes of tube circuits, operable as heating or cooling circuits, of a room heating system or of a combined room heating and room cooling system, and with deep-drawn supporting and spacing elements on the plate underside for supporting the plate on a building floor and for forming a cavity through which a fresh air and/or return air stream for heating or cooling by the floor heating and floor cooling system, respectively, in a building room is conducted, **characterised in that** the bottom element (8) comprises an upper plate (12) of plastics with deep-drawn supporting elements (fixing crosses 13) on the plate upperside (12a) for fixing spiral tubes (9), and deep-drawn supporting and spacer cams (14) on the plate underside (12b), and **in that** the supporting and spacer cams (14) of the upper plate are connected to a lower plate (15) of plastics adapted to be laid on a building floor, thereby forming a rectangular or square cavity element which is open at its four rims (8a-8d) or at two opposed rims and having a through flow space (16) for fresh air and/or return air.

2. Bottom element according to claim 1, **characterised in that** the upper plate (12) comprises knub segments (25) at the four rims of the bottom element (8) constructed as a cavity element, the knub segments (25) being deep-drawn from the plate underside and connected to the lower plate (15) and serving as connecting elements for two or four adjacent bottom elements (8).

3. Bottom element as claimed in claim 1 or 2, **characterised in that** the supporting and spacer cams (14) and the knub elements (25) of the upper plate (12) are welded or luted to the lower plate (15).

4. Bottom element according to one of claims 1 to 3, **characterised by** fixing crosses (13), deep-drawn from the upperside (12a) of the upper plate (12), for the spiral tubes (9), the fixing crosses (13), the supporting webs (21-24) of which being rectangular to each other, having rounded outer ends.

5. Bottom element according to one of claims 1 to 4, **characterised by** cutting grooves (26) formed into the upper plate (12) and lower plate (15) congruently in a raster and intended for cutting different bottoms element forms.

6. Connecting plate for bottom elements according to claims 1 to 5, **characterised by** hollow connecting pins (28) at the underside (27a) of and integral with the connecting plate (27) and being provided in the raster of the supporting and spacer cams (14) of the bottom element (8), the connecting pins (28) having a form adapted to the cam form of the cams (14) of the bottom elements (8), further **characterised by** a hollow fixing pin (29) integral with the plate underside centrally between the four connecting pins and having a form adapted to the form of the connecting knubs provided by the knub segments (25) at the four rims (8a-8d) of two or four adjacent bottom elements (8), further **characterised by** a pin or nail (31) provided integrally with the fixing pin (29) or separately for fastening the connecting plate (27) together with two or four bottom elements (8) held together by them, in a building floor (3), wherein the connecting plate engages with two connecting pins (28) each in two supporting and spacer cams (14) each of two adjacent bottom elements (8) and with the fixing pin (29) in a connecting knub (30) provided by the two bottom elements (8) or wherein the connecting plate (27) engages with a connecting pin (28) or wherein the connecting plate (27) engages with a connecting pin (28), respectively, in a supporting and spacer cam (14) of four bottom elements (8) adjoining in a corner joint and with the fixing pin (29) in a connecting knub (30) provided by the four bottom elements (8), and wherein the fastening pin or nail (31) is driven into the building floor (3) through a hole (32) in the base of a connecting knub (30) of two or four adjacent bottom elements (8) and/or into a footfall sound attenuation applied thereon.

7. Bottom element with the connecting plate according to claims 1 to 6, **characterised by** sealing the butt joint (34) between two adjacent bottom elements (8) by means of a splicing tape (35).

## Revendications

1. Élément de plancher pour construire des planchers surélevés pour des tubes de chauffage d'un chauffage de locaux ainsi que pour des tubes de chauffage et de refroidissement d'un chauffage et d'un refroidissement combinés de locaux pour des bâtiments, qui est constitué sous la forme de dalles en matière plastique ayant des éléments de maintien à emboutissage profond sur la face supérieure de la dalle pour la pose de serpentins de circuits tubulaires pouvant fonctionner comme circuits de chauffage ou de refroidissement d'un chauffage de locaux ou d'un chauffage et d'un refroidissement combinés de locaux et des éléments d'appui et d'entretoisement à emboutissage profond sur la face inférieure des dalles pour soutenir les dalles sur un plancher de bâtiment et pour former un espace creux dans lequel un courant d'air frais et/ou d'air de recirculation est envoyé pour le réchauffement ou pour le refroidissement pour le chauffage ou pour le refroidissement par le sol dans une pièce du bâtiment, **caractérisé en ce que** l'élément (8) de plancher a une dalle (2) supérieure en matière plastique ayant des éléments de maintien à emboutissage profond (croisillons 13 de fixation) sur la face supérieure (12a) de la dalle pour immobiliser des serpentins (9) et des bossages (14) d'appui et d'entretoisement à emboutissage profond sur la face (12b) inférieure de la dalle et **en ce que** les bossages (14) d'appui et d'entretoisement de la dalle (12) supérieure sont reliés par une dalle (15) inférieure en matière plastique, pouvant être posée sur la plancher (3) du bâtiment, en un élément à espace creux, rectangulaire ou carré, ouvert sur deux bords opposés et ayant un espace (16) de passage pour de l'air frais et/ou pour de l'air en recirculation.

2. Élément de plancher suivant la revendication 1, **caractérisé en ce que** la dalle (12) supérieure a, sur les quatre bords (8a à 8d) de l'élément (8) de plancher, constitué sous la forme d'un élément à espace creux, des segments (25) de téton emboutis de manière profonde à partir de la face (12b) inférieure de la dalle, reliés à la dalle (15) inférieure et servant d'éléments de liaison pour deux ou quatre éléments (8) de plancher adjacents.

3. Élément de plancher suivant les revendications 1 et 2, **caractérisé en ce que** les bossages (14) d'appui et d'entretoisement et les segments (25) de téton de la dalle (12) supérieure sont soudés ou sont collés à la dalle (15) inférieure.

4. Élément de plancher suivant l'une des revendications 1 à 3, **caractérisé par** des croisillons (13) d'immobilisation à emboutissage profond issus de la face (12a) supérieure de la dalle (12) supérieure et destinés aux serpentins (9), dont les barres (21 à 24) de maintien disposées à angle droit les unes par rapport aux autres ont des extrémités extérieures arrondies.

5. Élément de plancher suivant l'une des revendications 1 à 4, **caractérisé par** des nervures (26) de coupe formées à recouvrement dans la dalle (12) supérieure et dans la dalle (15) inférieure suivant une trame et destinées à couper des formats d'éléments de plancher différents.

6. Dalle de liaison pour des éléments de plancher suivant la revendication 1 à 5, **caractérisée par** des tenons (28) de liaison creux issus de la face (27a) inférieure de la dalle (27) de liaison disposés suivant la trame des bossages (14) d'appui et d'entretoisement des éléments (8) de plancher et ayant une forme adaptée à la forme des bossages (14) des éléments (8) de plancher, ainsi qu'un autre tenon (29) d'immobilisation creux formé de manière centrale entre les quatre tenons (28) de liaison sur la face (27a) inférieure de la dalle et ayant une forme qui est adaptée à la forme de tétons (30) de liaison qui sont formés par les segments (25) de téton sur les quatre bords (8a à 8d) de deux ou de quatre éléments (8) de plancher adjacents, ainsi qu'une broche ou aiguille (31) formée sur le tenon (29) d'immobilisation ou séparée pour fixer la dalle (27) de liaison à deux ou à quatre éléments (8) de plancher maintenus ensemble par celle-ci sur un plancher (3) de bâtiment, la dalle (27) de liaison pénétrant par, respectivement, deux tenons (28) de liaison dans, respectivement, deux bossages (14) d'appui et d'entretoisement de deux éléments (8) de plancher adjacents et par le tenon (29) d'immobilisation dans l'un des deux tétons (30) de liaison formés par les deux éléments (8) de plancher ou la dalle (27) de liaison pénètre par, respectivement, un tenon (28) de liaison dans, respectivement, un bossage (14) d'appui et d'entretoisement de quatre éléments (8) de plancher adjacents dans un creux et par le tenon (29) de fixation dans un téton (30) de liaison formé par les quatre éléments (8) de plancher et la broche ou l'aiguille (31) de fixation est enfoncée dans un trou (32) au fond (33) d'un téton (30) de liaison de deux ou quatre éléments (8) de plancher adjacents dans le plancher (3) du bâtiment et/ou dans un dispositif (5) d'atténuation des bruits de pas qui est posé sur celui-ci.

7. Élément de plancher ayant une dalle de liaison suivant la revendication 1 à 6, **caractérisé par** l'étanchéité des joints (34) entre deux éléments (8) de plancher adjacents par un ruban (35) adhésif.
